# EUROPÄISCHE PATENTANMELDUNG

(11) **EP 3 800 064 A1**
(43) Veröffentlichungstag der Anmeldung: **07.04.2021**
(21) Anmeldenummer: 20198676.7
(22) Anmeldetag: 28.09.2020
(51) Int. Cl.: B43K 5/00, B43K 7/00, B43K 8/00, B43K 29/02

(54) **SCHREIBGERÄT**

(30) Priorität: 04.10.2019 DE 202019105498 U
(71) Anmelder: Online Schreigeräte GmbH, 92318 Neumarkt (DE)
(72) Erfinder: Batsch, Thomas, 92367 Pilsach (DE)
(74) Vertreter: Glück Kritzenberger Patentanwälte PartGmbB

(57) **Zusammenfassung**

Die Erfindung betrifft ein Schreibgerät mit einem zumindest zweiteiligen länglichen Gehäuse, umfassend ein vorderes Gehäuseteil und ein hinteres Gehäuseteil, wobei in dem vorderen Gehäuseteil ein tintenbasiertes Schreibelement und in dem hinteren Gehäuseteil ein Radierelement gehalten sind, wobei das Gehäuse zur Aufnahme einer Tinte enthaltenden Tintenpatrone ausgebildet ist, und wobei der vordere und hintere Gehäuseteil der Gehäuse derart lösbar miteinander verbunden sind, dass bei einem Separieren des vorderen und hinteren Gehäuseteils die Tintenpatrone aus dem Gehäuse entnehmbar ist. Vorteilhaft ist die in der Tintenpatrone enthaltene Tinte thermochrom und das Radierelement ist an die thermochromatische Tinte derart angepasst, dass durch Anwendung des Radierelementes auf die thermochromatische Tinte zumindest die Sichtbarkeit der thermochromen Tinte thermisch bedingt eliminierbar ist.

## Beschreibung

Die vorliegende Erfindung betrifft ein Schreibgerät mit einem zumindest zweiteiligen länglichen Gehäuse umfassend ein vorderes Gehäuseteil und ein hinteres Gehäuseteil gemäß dem Oberbegriff des Anspruches 1.

In dem vorderen Gehäuseteil ist ein tintenbasiertes Schreibelement aufgenommen, wohingegen in dem hinteren Gehäuseteil ein Radierelement gehalten ist. Weiterhin ist das Gehäuse zur Aufnahme einer Tinte aufweisenden Tintenpatrone ausgebildet. Das tintenbasierte Schreibelement kann zum Beispiel eine Feder, eine Fasermine oder ein Rollerball sein bzw. enthalten. Die beiden Gehäuseteile des Gehäuses sind so miteinander verbunden, dass bei einem Separieren der beiden Gehäuseteile die Tintenpatrone aus dem Gehäuse entnehmbar ist.

Es ist Aufgabe der Erfindung, ein Schreibgerät zu schaffen, dass ein optimiertes Löschen von geschriebenem Inhalt ermöglicht. Diese Aufgabe wird durch ein Schreibgerät mit den Merkmalen des Anspruchs 1 gelöst. Vorteilhafte Weiterbildungen der Erfindung sind Gegenstand der abhängigen Ansprüche.

Erfindungsgemäß ist die in der Tintenpatrone enthaltene Tinte thermochrom und das Radierelement an die thermochromatische Tinte derart angepasst, dass durch Anwendung des Radierelementes auf die thermochromatische Tinte zumindest die Sichtbarkeit der thermochromen Tinte thermisch bedingt eliminierbar ist. D.h. das Radierelement ist derart ausgebildet, dass seine Anwendung auf der Tinte zu einer thermisch bedingten Eliminierung der Sichtbarkeit der thermochromen Tinte führt. Die Erfindung hat den Vorteil, dass ein mit dem Schreibelement geschriebener Text oder anderer "Content" durch die Anwendung des Radierelements auf der geschriebenen Tinte wieder gelöscht werden kann, d.h. zumindest die Farbwirkung der Tinte wird durch Anwendung des Radierelements aufgehoben. Beim Anwenden des Radierelements auf der aufgetragenen Tinte wird thermisch erhitzt, wodurch die Farbwirkung der Tinte aufgehoben wird. Somit ist es möglich, einen fehlerhaften Tintenauftrag nachträglich wieder zu korrigieren. Besonders vorteilhaft ist das freiendseitig angeordnete und damit im Anwendungsfall sofort verfügbare Radierelement an die im Schreibgerät verwendete Tinte angepasst, um dadurch den optimalen Wirkungsgrad zu erreichen.

Vorzugsweise sind die Farbpartikel der Tinte in Mikrokapseln enthalten, wobei die Farbpartikel in der Tinte aus einer Kombination von mindestens zwei Komponenten besteht, die bei Erhitzung voneinander separieren und damit ihre Farbwirkung verlieren. Auf diese Weise kann eine Anwendung des Radierelements auf der geschriebenen Tinte zu einer kurzzeitigen Überhitzung der Mikrokapseln führen und damit zu einer Separierung der Farbkomponenten, was die Sichtbarkeit der Tinte erlöschen lässt. Auf diese Weise kann geschriebener Content durch die Anwendung des Radierelements wirkungsvoll gelöscht werden.

Vorzugsweise hat die Tinte eine Viskosität zwischen 10 Poise und 40 Poise, wodurch die Löschbarkeit nochmals deutlich verbessert wird.

Vorzugsweise ist die Tinte wasserbasiert, was hinsichtlich der Umweltverträglichkeit positiv ist.

Es hat sich herausgestellt, dass ein Radierelement aus Silikonkautschuk oder aus Styrol-Ethylen-Butylen-Styrol (SEBS) sehr gute Friktionseigenschaft mit der oben genannten Tinte mit sich bringt, so dass ein derartiges Radierelement zu einem wirksamen Löschen der Sichtbarkeit der Tinte führt.

Vorzugsweise ist das Schreibelement ein Rollerball, welcher eine unkomplizierte und gleichmäßige Aufbringung der Tinte auf ein Substrat, zum Beispiel ein Papier, ermöglicht. Das Schreibelement kann jedoch auch eine Feder oder eine Fasermine sein.

Vorzugsweise ist das Gehäuse etwa in der Mitte geteilt. So können dann beispielsweise in dem vorderen Gehäuseteil der Aufnahmestutzen für die Tintenpatrone, das Schreibelement und alle dazwischenliegenden tintenleitenden Elemente angeordnet sein, während im hinteren Gehäuseteil lediglich der Schaft mit dem Aufnahmeraum für die Tintenpatrone und das Radierelement angeordnet sind.

Vorzugsweise sind die beiden Gehäusehälften durch ein Gewinde miteinander verbindbar. Auf diese Weise können die Gehäusehälften bzw. hälftigen Gehäuseteile zum Auswechseln der Tintenpatrone leicht voneinander getrennt und wieder miteinander verbunden werden.

Vorzugsweise hat das vordere Gehäuseteil an seinem Außenumfang einen Griffbereich, insbesondere mit verbesserten Friktionseigenschaften, was die Handhabbarkeit des Schreibgeräts deutlich verbessert. So kann das vordere Gehäuseteil vorzugsweise als Griffstück mit integriertem Schreibelement ausgebildet sein.

Vorzugsweise sind deshalb in dem vorderen Gehäuseteil ein Aufnahmestutzen für die Tintenpatrone ausgebildet, der über einen Tintenleiter mit dem Schreibelement, zum Beispiel einem Docht mit einer Metallspitze oder einer Fasermine oder Feder, verbunden ist. Eine derartige Ausbildung des Schreibelements ist leicht herstellbar, zuverlässig im Gebrauch und auch unter Entsorgungsaspekten einfach zu recyceln.

In einer vorteilhaften Weiterbildung der Erfindung ist in dem hinteren Gehäuseteil eine das Radierelement aufnehmende Endkappe ausgebildet, welche abnehmbar an dem hinteren Gehäuseteil gehalten ist. Auf diese Weise kann zum Beispiel nur das Radierelement nach Abnutzung ausgewechselt werden. Die Endkappe kann nach Abnehmen von dem hinteren Gehäuseteil das Radierelement freigeben, so dass lediglich das Radierelement ausgewechselt werden kann, was unter Umweltgesichtspunkten positiv ist.

Vorzugsweise enthält das Gehäuse des Schreibgeräts an seinem Außenumfang einen Aufnahmebereich für eine Verschlusskappe des Schreibgeräts. Dr Aufnahmebereich kann mit einer Innenfläche der Verschlusskappe zum Beispiel friktionsmäßig und/oder formgriffig, z.B. durch eine Rastnut, zusammenwirken. Auf diese Weise kann mit dem Aufsetzen der Verschlusskappe des Schreibgeräts das Schreibelement gegen Austrocknen geschützt werden. Zudem kann es vor Beschädigung vermieden werden. Wenn die Verschlusskappe einen Clip aufweist, kann das Schreibgerät weiterhin einfach zum Beispiel an einer Jackentasche befestigt werden.

Gegenstand der Erfindung ist ebenfalls eine auswechselbare Tintenpatrone umfassend eine thermochrome Tinte zur Verwendung in einem erfindungsgemäßen Schreibgerät. Vorzugsweise ist die Tintenpatrone aus einem recyclebaren Material hergestellt. Beispielsweise kann als Material Polypropylen Verwendung finden.

Es ist für den Fachmann offensichtlich, dass die oben beschriebenen Ausführungsformen der Erfindung in beliebiger Weise miteinander kombiniert werden können.

Die Erfindung wird nachfolgend beispielsweise anhand der schematischen Zeichnung beschrieben. In dieser zeigen:
- Fig. 1: einen Längsschnitt mit einem Rollerball als Schreibelement,
- Fig. 2: einen Längsschnitt durch eine Verschlusskappe des Schreibgeräts gemäß Fig. 1 und
- Fig. 3: eine Seitenansicht des Schreibgeräts aus Fig. 1 mit aufgesetzter Verschlusskappe gemäß Fig. 2.

Das Schreibgerät 10 hat ein längliches Gehäuse 12 mit einem vorderen Gehäuseteil 14 und einem hinteren Gehäuseteil 16. Das vordere Gehäuseteil 14 ist als Griffstück ausgebildet und beinhaltet einen Anschlussstutzen 18 für eine Tintenpatrone 21, in welcher thermochrome Tinte 23 enthalten ist. Der Aufnahmestutzen 18 ist über einen Tintenleiter 20 mit einem Docht 22 verbunden, der an seinem vorderen Ende eine Metallspitze 24 mit einer Schreibkugel aufweist. Der Aufnahmestutzen 18, der Tintenleiter 20 und der Docht 22 mit der Metallspitze 24 sind integriert in dem Griffstück 14 aufgenommen.

Das hintere Gehäuseteil 16 ist als Schaft ausgebildet und ist über ein Gewinde 26 mit dem vorderen Gehäuseteil 12, das heißt mit dem Griffstück, verschraubbar. Das hintere Griffteil 16 bildet einen in etwa zylindrischen Schaft mit einem Aufnahmeraum für die Tintenpatrone 21. An dem hinteren Ende des hinteren Gehäuseteils 16 ist eine Endkappe 28 abnehmbar gehalten. Diese Endkappe 28 umgreift einen radial erweiterten Fortsatz 30 eines Radierelements 32, das nach hinten durch eine Öffnung 33 aus der Endkappe 28 hervorsteht. Durch Abnehmen der Endkappe 28 von dem hinteren Griffteil 16 kann so zum Beispiel ein abgenutztes Radierelement 32 entnommen und gegen ein neues ausgetauscht werden. Dies ist sehr umweltschonend, da bei einer Abnutzung des Radierelements 32 nur dieses und keine weiteren Gehäuseteile ausgewechselt werden müssen.

Das Gehäuse 12 trägt im Bereich des Gewindes 26 an seinem Außenumfang einen Aufnahmebereich 34 für eine Verschlusskappe 36, die mit ihrer Innenwand 38 auf den Aufnahmebereich 34 des Gehäuses 12 aufgeschoben und dort zum Beispiel über Friktion oder über eine Schnappnut auch formschlüssig gehalten werden kann. Die Verschlusskappe 36 dient dazu, das Schreibelement gegen Austrocknung der Tinte 23 zu sichern und vor allem auch Beschädigungen des Schreibelements im Gebrauch zu vermeiden.

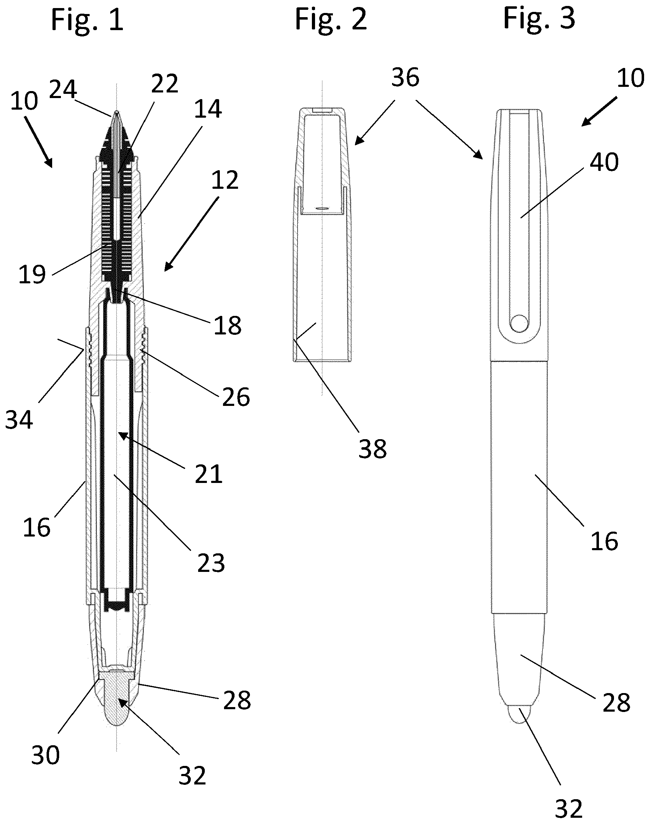

Fig. 3 zeigt das Schreibgerät 10 mit aufgesetzter Verschlusskappe 36. Die Verschlusskappe 36 hat einen Clip 40, mit welchem das Schreibgerät 10 zum Beispiel an einer Jackentasche festlegbar ist. Die in der Tintenpatrone 21 gehaltene Tinte 23 ist eine thermochrome Tinte, die zum Beispiel Mikrokapseln enthalten kann, in welchen die aus mindestens zwei Komponenten bestehenden Farbpartikel der Tinte 23 aufgenommen sind. Bei einer thermischen Beanspruchung, zum Beispiel durch Reiben des Radierelements 32 auf der aufgetragenen Tinte 23, wird diese erhitzt, wobei die Verbindung der beiden Komponenten in den Mikrokapseln aufbricht, was zu einer Unsichtbarkeit der thermochromen Tinte 23 führt. Auf diese Weise können mit der Tinte 23 aufgetragene Passagen durch Verwendung des Radierelements 32 wieder gelöscht werden. Die Tinte 23 ist vorzugsweise wasserbasiert und damit umweltverträglich. Das Gehäuse 10 ist insbesondere aus Kunststoff gefertigt, wie auch der Aufnahmestutzen 18, Tintenleiter 20 und Docht 22 im vorderen Gehäuseteil 12. Das Schreibgerät lässt sich somit umweltfreundlich recyceln.

Die Erfindung ist nicht auf das dargestellte Ausführungsbeispiel beschränkt, sondern kann im Schutzbereich der beigefügten Patentansprüche beliebig variiert werden.

### Bezugszeichenliste

- 10: Schreibgerät
- 12: Gehäuse des Schreibgeräts
- 14: vorderes Gehäuseteil - Griffstück
- 16: hinteres Gehäuseteil - Schaft
- 18: Aufnahmestutzen für die Tintenpatrone
- 20: Tintenleiter
- 21: Tintenpatrone
- 22: Docht des Schreibelements
- 23: monochrome Tinte
- 24: Metallspitze des Schreibelements mit Rollerball - Fasermine
- 26: Gewinde zum Verschrauben von vorderem und hinterem Gehäuseteil
- 28: Endkappe zum Verbinden mit dem hinteren Ende des hinteren Gehäuseteils
- 30: radial erweiterter Fortsatz des Radierelements
- 32: Radierelement
- 33: hintere Öffnung in der Endkappe
- 34: Aufnahmebereich am Außenumfang des Gehäuses für die Verschlusskappe
- 36: Verschlusskappe
- 38: Innenwand der Verschlusskappe zum Aufsetzen auf den Aufnahmebereich
- 40: Clip an der Verschlusskappe

## Patentansprüche

1. Schreibgerät (10) mit einem zumindest zweiteiligen länglichen Gehäuse (12), umfassend ein vorderes Gehäuseteil (14) und ein hinteres Gehäuseteil (16), wobei in dem vorderen Gehäuseteil (14) ein tintenbasiertes Schreibelement (22, 24) und in dem hinteren Gehäuseteil (16) ein Radierelement (32) gehalten sind, wobei das Gehäuse (12) zur Aufnahme einer Tinte (23) enthaltenden Tintenpatrone (21) ausgebildet ist, und wobei der vordere und hintere Gehäuseteil (14, 16) der Gehäuses (12) derart lösbar miteinander verbunden sind, dass bei einem Separieren des vorderen und hinteren Gehäuseteils (14, 16) die Tintenpatrone (21) aus dem Gehäuse (12) entnehmbar ist, **dadurch gekennzeichnet, dass** die in der Tintenpatrone (21) enthaltene Tinte (23) thermochrom ist und das Radierelement (32) an die thermochromatische Tinte (23) derart angepasst ist, dass durch Anwendung des Radierelementes (32) auf die thermochromatische Tinte (23) zumindest die Sichtbarkeit der thermochromen Tinte (23) thermisch bedingt eliminierbar ist.

2. Schreibgerät (10) nach Anspruch 1, **dadurch gekennzeichnet**, das die Tinte (23) Farbpartikel aufweist, welche in der Tinte (23) in Mikrokapseln enthalten sind, und dass die Farbpartikel aus einer Kombination von mindestens zwei Komponenten besteht, die bei Erhitzung voneinander separieren und damit ihre Farbwirkung verlieren.

3. Schreibgerät (10) nach Anspruch 1 oder 2, **dadurch gekennzeichnet**, das die Tinte (23) eine Viskosität zwischen 10 Poise und 40 Poise aufweist.

4. Schreibgerät (10) nach einem der vorhergehenden Ansprüche, **dadurch gekennzeichnet, dass** die Tinte (23) wasserbasiert ist.

5. Schreibgerät (10) nach einem der vorhergehenden Ansprüche, **dadurch gekennzeichnet, dass** das Radierelement (32) aus Silikonkautschuk oder aus Styrol-Ethylen-Butylen-Styrol besteht oder darauf basiert.

6. Schreibgerät (10) nach einem der vorhergehenden Ansprüche, **dadurch gekennzeichnet, dass** das Schreibelement (22, 24) ein Rollerballelement ist.

7. Schreibgerät (10) nach einem der vorhergehenden Ansprüche, **dadurch gekennzeichnet, dass** das Gehäuse (12) in etwa in der Mitte geteilt ist.

8. Schreibgerät (10) nach einem der vorhergehenden Ansprüche, **dadurch gekennzeichnet, dass** die beiden hälftigen Gehäuseteile (14, 16) durch ein Gewinde (26) lösbar miteinander verbindbar sind.

9. Schreibgerät (10) nach einem der vorhergehenden Ansprüche, **dadurch gekennzeichnet, dass** das vordere Gehäuseteil (14) an seinem Außenumfang einen Griffbereich, insbesondere mit verbesserten Friktionseigenschaften aufweist.

10. Schreibgerät (10) nach einem der vorhergehenden Ansprüche, **dadurch gekennzeichnet, dass** in dem vorderen Gehäuseteil (14) ein Aufnahmestutzen (18) für die Tintenpatrone (21) ausgebildet ist, der über einen Tintenleiter (20) mit dem Schreibelement (22, 24) verbunden ist und/oder dass in dem hinteren Gehäuseteil (16) eine das Radierelement (32) aufnehmende Endkappe (28) ausgebildet ist, welche abnehmbar an dem hinteren Gehäuseteil (16) gehalten ist.

11. Schreibgerät (10) nach Anspruch 10, **dadurch gekennzeichnet, dass** das Radierelement (32) nach entfernter Endkappe (28) separat entnehmbar ist.

12. Schreibgerät (10) nach einem der vorhergehenden Ansprüche, **dadurch gekennzeichnet, dass** das Gehäuse (12) an seinem Außenumfang einen Aufnahmebereich (34) für eine Verschlusskappe (36) des Schreibgeräts (10) aufweist.

13. Schreibgerät (10) nach Anspruch 12, **dadurch gekennzeichnet, dass** die Verschlusskappe (36) einen Clip (40) aufweist.

14. Auswechselbare Tintenpatrone (21) umfassend eine thermochrome Tinte zur Verwendung in einem Schreibgerät (10) nach einem der vorhergehenden Ansprüche.

15. Auswechselbare Tintenpatrone (21) nach Anspruch 14, **dadurch gekennzeichnet, dass** die Tintenpatrone (21) aus einem recyclebaren Material, beispielsweise Polypropylen hergestellt ist.
